# EUROPÄISCHE PATENTSCHRIFT

(11) **EP 4 084 249 B1**
(45) Veröffentlichungstag und Bekanntmachung des Hinweises auf die Patenterteilung: **11.10.2023**
(21) Anmeldenummer: 22170562.7
(22) Anmeldetag: 28.04.2022
(51) Int. Cl.: H02H 3/087, B60L 3/00, B60R 16/03, H02H 7/26

(54) **BORDNETZ, INSBESONDERE FÜR EIN KRAFTFAHRZEUG**
VEHICLE ELECTRICAL SYSTEM, IN PARTICULAR FOR A MOTOR VEHICLE
RÉSEAU EMBARQUÉ; EN PARTICULIER POUR UN VÉHICULE AUTOMOBILE

(30) Priorität: 29.04.2021 DE 102021111027
(43) Veröffentlichungstag der Anmeldung: 02.11.2022
(73) Patentinhaber: Continental Automotive Technologies GmbH, 30165 Hannover (DE)
(72) Erfinder: Ramsauer, Ludwig, 81739 München (DE); Knorr, Rainer, 81737 München (DE); Preisler, Stephanie, 81737 München (DE); Reichow, Dirk, 81737 München (DE)
(74) Vertreter: Wagner Albiger & Partner Patentanwälte mbB

(56) Entgegenhaltungen:
- WO-A1-2009/012843
- DE-B3-102005 008 766
- DE-B3-102018 216 491
- JP-A- 2006 040 798
- KR-A- 20130 128 177

## Beschreibung

### Technisches Gebiet:

Die vorliegende Erfindung betrifft ein Bordnetz, insb. für ein Kraftfahrzeug, speziell für ein elektrisch angetriebenes Kraftfahrzeug.

### Stand der Technik und Aufgabe der Erfindung:

Bordnetze für technische Vorrichtungen, insb. für Kraftfahrzeuge, speziell für elektrisch angetriebene Fahrzeuge, weisen zwei oder mehr Bordnetzzweige auf, in denen verschiedene Stromverbraucher, die bspw. aus sicherheitsrelevanten Gründen voneinander unabhängig mit Strom versorgt werden sollen, voneinander getrennt elektrisch angeschlossen sind und somit von den jeweiligen Bordnetzzweigen separat mit Strom versorgt werden.

### Zwischen diesen Bordnetzzweigen werden in der Regel

Trennschalteranordnungen vorgesehen, die bei Bedarf, wie z. B. bei einer Störung in einem der Bordnetzzweige, die Bordnetzzweige voneinander elektrisch trennen. Wie bei allen sicherheitsrelevanten Komponenten technischer Vorrichtungen, wie z. B. Fahrzeug-Komponenten, besteht für die Bordnetze eine hohe Anforderung an Zuverlässigkeit.

Damit besteht die Aufgabe der vorliegenden Anmeldung darin, ein Bordnetz einer technischen Vorrichtung, insb. eines Kraftfahrzeugs, speziell eines elektrisch angetriebenen Kraftfahrzeugs, zuverlässiger zu gestalten.

### Beschreibung der Erfindung:

Diese Aufgabe wird durch den Gegenstand des unabhängigen Anspruchs 1 gelöst.

Vorteilhafte Ausgestaltungen sind Gegenstand der Unteransprüche.

Gemäß einem ersten Aspekt der Erfindung wird ein Bordnetz für eine technische Vorrichtung, insb. für ein Kraftfahrzeug, speziell für ein elektrisch angetriebenes Fahrzeug, bereitgestellt.

Das Bordnetz weist mindestens zwei Bordnetzzweige auf, die miteinander über einen positivspannungsseitigen Strompfad elektrisch verbunden sind und jeweils mindestens einen, insb. sicherheitsrelevanten, Stromverbraucher aufweisen.

Das Bordnetz weist ferner mindestens eine Trennschalteranordnung auf, wobei die Trennschalteranordnung in dem positivspannungsseitigen Strompfad zwischen den beiden Bordnetzzweigen elektrisch angeschlossen ist. Dabei ist die Trennschalteranordnung eingerichtet, in einem kritischen Zustand bei einem der beiden Bordnetzzweige einen Stromfluss über den Strompfad zu unterbrechen und somit die beiden Bordnetzzweige voneinander elektrisch zu trennen. Hierzu weist die Trennschalteranordnung eine erste steuerbare Schaltereinheit sowie eine Serienschaltung von einer zweiten steuerbaren Schaltereinheit und einer Überstromschutzeinheit auf. Dabei sind die erste Schaltereinheit und die Serienschaltung zueinander parallel in dem Strompfad zwischen den beiden Bordnetzzweigen elektrisch angeschlossen.

Die Trennschalteranordnung weist ferner eine Steuereinheit zum Ansteuern der Trennschalteranordnung auf, die steuersignalausgangsseitig mit der ersten und der zweiten Schaltereinheit bzw. deren jeweiligen Steuersignaleingangsanschlüssen signaltechnisch verbunden ist. Die Steuereinheit ist eingerichtet, in einem Ruhemodus bzw. in einem Niederleistungsmodus (auf Englisch "Low-Power-Modus") des Bordnetzes, in dem die technische Vorrichtung nicht im Betrieb ist (bzw. das Fahrzeug abgestellt ist und somit nicht im Fahrbetrieb ist), die erste Schaltereinheit in einen offenen, stromsperrenden Schaltzustand zu schalten und in diesem stromsperrenden Schaltzustand zu halten, und zugleich die zweite Schaltereinheit in einem geschlossenen, stromleitenden Schaltzustand zu schalten und in diesem stromleitenden Schaltzustand zu halten. Die Überstromschutzeinheit ist ferner eingerichtet, im Ruhemodus und im Falle eines Überstromes in der Serienschaltung den Stromfluss über die Serienschaltung zu unterbrechen.

Das oben beschriebene Bordnetz mit mindestens zwei, miteinander über die Trennschalteranordnung elektrisch verbundenen Bordnetzzweigen stellt eine redundante und voneinander unabhängige Stromversorgung von diversen Stromverbrauchen unterschiedlicher Leistungsanforderungen und unterschiedlicher Empfindlichkeiten gegenüber Spannungs-/Stromschwankungen im Bordnetz, wie z. B. Aktuatoren und Controllern, sicher und ermöglicht eine zuverlässige Durchführung von, insb. sicherheitsrelevanten, Funktionen der technischen Vorrichtung, bzw. von, insb. sicherheitsrelevanten, Fahrzeugfunktionen, wie z. B. vom automatisierten Fahren von Fahrzeugen.

Die Trennschalteranordnung stellt bei einer Störung in einem der beiden Bordnetzzweige eine zuverlässige Stromversorgung in dem anderen störungsfreien Bordnetzzweig sicher und ermöglich somit eine voneinander unabhängige Stromversorgung der beiden Bordnetzzweige. Eine galvanische Trennung der beiden Bordnetzzweige oder gar eine doppelte Bordnetz-Ausführung mit zwei voneinander elektrisch isolierten Bordnetzen in einer technischen Vorrichtung bzw. in einem Fahrzeug ist somit nicht erforderlich.

Dabei wird die zuverlässige Stromversorgung von der Trennschalteranordnung bewerkstelligt, die über ihre erste steuerbare Schaltereinheit (Hauptschaltereinheit, auf Englisch "Main Disconnector") und ihre Serienschaltung mit einer zweiten steuerbaren Schaltereinheit (Nebenschaltereinheit, auf Englisch "Bypass Disconnector") den Stromfluss zwischen den beiden Bordnetzzweigen im Betriebsmodus und im Ruhemodus des Bordnetzes steuert.

Dadurch, dass die Trennschalteranordnung im Ruhe- bzw. Niederleistungsmodus des Bordnetzes über die Steuereinheit die erste Schaltereinheit bzw. die Hauptschaltereinheit, die im Betriebsmodus des Bordnetzes hauptsächlich für die Stromübertragung zwischen den beiden Bordnetzzweigen zuständig ist, in einen offenen, stromsperrenden Schaltzustand schaltet und in diesem stromsperrenden Schaltzustand hält, stellt die Trennschalteranordnung sicher, dass im Ruhemodus keine allzu große Menge an Strom zwischen den beiden Bordnetzzweigen übertragen wird. Zugleich schaltet die Trennschalteranordnung im Ruhemodus über die Steuereinheit die zweite Schaltereinheit bzw. die Nebenschaltereinheit in einen geschlossenen, stromleitenden Schaltzustand und hält die zweite Schaltereinheit in diesem stromleitenden Schaltzustand. Dadurch wird ein geringfügiger Stromfluss zwischen den beiden Bordnetzzweigen zur Versorgung von (insb. sicherheitsrelevanten) Funktionen, wie z. B. die Funktion "Zündung-Aus" (auf Englisch "Key-Off") bei einem Fahrzeug, gewährleistet.

Die Überstromschutzeinheit stellt im Ruhemodus passiv und ohne zusätzlichen Stromverbrauch (ohne dass diese zusätzlich Strom verbraucht) sicher, dass die zweite Schaltereinheit und somit auch die Trennschalteranordnung nicht unkontrolliert ihren sicheren Arbeitsbereich (auf English "Safe Operating Area (SOA)") verlasst, sodass bei einem nachfolgenden Übergang von dem Ruhemodus in den Betriebsmodus der Zustand der Trennschalteranordnung nicht diagnostizierbar bleibt und somit eine zuverlässige Funktion der Trennschalteranordnung im Betriebsmodus nicht mehr gewährleistet ist.

Hierzu unterbricht die Überstromschutzeinheit den Stromfluss über die Serienschaltung und somit über die zweite Schaltereinheit, sobald im Ruhemodus ein kritischer Überstrom, wie z. B. ein Kurzschlussstrom, durch die Serienschaltung fließt, und schützt somit die zweite Schaltereinheit vor einer Beschädigung durch den Überstrom und stellt sicher, dass die zweite Schaltereinheit und somit auch die Trennschalteranordnung nicht unkontrolliert ihren sicheren Arbeitsbereich verlässt.

Zudem stellt die Überstromschutzeinheit die Möglichkeit bereit, bei einem Übergang von einem Ruhemodus in einen nachfolgenden Betriebsmodus den Zustand der Trennschalteranordnung zuverlässig zu diagnostizieren. Hierzu bedarf bspw. lediglich den Zustand der Überstromschutzeinheit zu diagnostizieren, wobei basierend auf den diagnostizierten Zustand eine zuverlässige Aussage über den Zustand der Trennschalteranordnung getroffen werden kann.

Damit ist die Trennschalteranordnung jederzeit diagnostizierbar und ist somit auch in der Lage, eine Eigenbeschädigung durch einen Überstrom im Bordnetz, insb. im Ruhemodus des Bordnetzes, zu erkennen und Folgeschäden bei sich und beim Bordnetz zu verhindern.

Damit ist eine Möglichkeit bereitgestellt, ein Bordnetz einer technischen Vorrichtung, insb. eines Kraftfahrzeugs, speziell eines elektrisch angetriebenen Kraftfahrzeugs, zuverlässiger zu gestalten.

Das Bordnetz kann in Kraftfahrzeugen, insb. elektrisch betriebenen Kraftfahrzeugen, und auch in der elektrischen Energieversorgung von sonstigen elektrischen Vorrichtungen, wie z. B. Flugzeugen, in höheren Spannungsbereichen eingesetzt werden.

Bspw. ist die Steuereinheit ferner eingerichtet, in einem Betriebsmodus (auf Englisch "High-Power-Mode") des Bordnetzes, in dem sich die technische Vorrichtung im Betrieb befindet (bzw. das Fahrzeug im Fahrbetrieb befindet), die erste Schaltereinheit in einen geschlossenen, stromleitenden Schaltzustand zu schalten und in dem stromleitenden Schaltzustand zu halten, und die zweite Schaltereinheit in einen offenen, stromsperrenden Schaltzustand zu schalten und in diesem stromsperrenden Schaltzustand zu halten.

Bspw. weist die Trennschalteranordnung ferner eine Überwachungseinheit zur Überwachung des Zustands der Überstromschutzeinheit auf. Die Überwachungseinheit ist signalausgangsseitig mit einem Signaleingang der Steuereinheit signaltechnisch verbunden. Die Überwachungseinheit ist eingerichtet, im Falle, dass die Überstromschutzeinheit eine Störung aufweist oder defekt ist und somit ihre Schutzwirkung verliert bzw. verloren hat, durch Ausgabe eines Zustandswarnsignals die Steuereinheit dazu veranlassen, bei einem Übergang von dem Ruhemodus in den Betriebsmodus des Bordnetzes die erste Schaltereinheit in dem offenen stromsperrenden Schaltzustand zu halten (bzw. in den offenen stromsperrenden Schaltzustand zu schalten und in diesem offenen Schaltzustand zu halten) und somit einen Stromfluss zwischen den beiden Bordnetzzweig über die erste Schaltereinheit zu unterbrechen. Ferner ist die Überwachungseinheit vorzugsweise eingerichtet, durch Ausgabe des Zustandswarnsignals die Steuereinheit ferner dazu veranlassen, bei dem Übergang von dem Ruhemodus in den Betriebsmodus auch die zweite Schaltereinheit in dem offenen stromsperrenden Schaltzustand zu halten (bzw. in den offenen stromsperrenden Schaltzustand zu schalten und in diesem offenen Schaltzustand zu halten) und somit einen Stromfluss zwischen den beiden Bordnetzzweig auch über die zweite Schaltereinheit und folglich über die gesamte Trennschalteranordnung zu unterbrechen.

Die Überwachungseinheit ermittelt bei einem Übergang von einem Ruhemodus in einen nachfolgenden Betriebsmodus, ob die Trennschalteranordnung noch intakt ist (bzw. ob sich die Trennschalteranordnung noch in dem sicheren Arbeitsbereich befindet). Mit der Überwachungseinheit ist die Trennschalteranordnung somit jederzeit diagnostizierbar. Ferner stellt die Überwachungseinheit mit ihrer Zustandsdiagnose bei der Trennschalteranordnung einen sicheren Übergang des Bordnetzes von einem Ruhemodus in einen nachfolgenden Betriebsmodus sicher, und schützt somit das Bordnetz bzw. zumindest einen noch intakten Bordnetzzweig vor Folgeschäden durch einen Überstrom, der während des Ruhemodus in einem anderen der beiden Bordnetzzweige eingetreten ist.

Die Zustandsdiagnose bei der Trennschalteranordnung mit der Überwachungseinheit benötigt keine zusätzliche Stromversorgung während des Ruhemodus.

Die Trennschaltung vereint somit eine zuverlässige Absicherung der Trennschaltung selbst sowie des Bordnetzes vor Folgeschäden durch einen Überstrom in einem der Bordnetzzweige während eines Ruhemodus des Bordnetzes, und eine zuverlässige Diagnose von Unregelmäßigkeiten bzw. kritischen Zuständen in der Trennschaltung selbst sowie im Bordnetz beim Verlassen des Ruhemodus, ohne dass die Trennschaltung unkontrolliert deren sicheren Arbeitsbereich verlässt und zudem noch undiagnostizierbar bleibt.

Bspw. weist die Überstromschutzeinheit eine Schmelzsicherung auf. Im Falle eines Überstromes bzw. Kurzstromes in der Serienschaltung schmilzt die Schmelzsicherung und unterbricht somit den Stromfluss durch die Serienschaltung. Dabei verliert die Überstromschutzeinheit ihre Schutzwirkung. Dieses Ereignis bzw. der Verlust der Schutzwirkung der Überstromschutzeinheit lassen sich jedoch mit der Überwachungseinheit einfach diagnostizieren.

Anstelle der Schmelzsicherung kann auch eine elektronische oder mechanische Schaltung, wie z. B. eine Pyro-Fuse (eine pyrotechnische Trennschaltung bzw. ein pyrotechnisches Trennelement), oder eine gezielte Verjüngung einer Leiterbahn der Serienschaltung, durch die der Stromfluss der Serienschaltung erfolgt, als Überstromschutzeinheit eingesetzt werden, die die gleiche Funktion der Schmelzsicherung erfüllt.

Im Falle der Pyro-Fuse wird diese bzw. ein Teil davon bei einem Überstrom bzw. einem Kurzstrom in der Serienschaltung bspw. mittels kleiner integrierter Treibsätze (infolge der hohen Energie des Überstromes automatisch) gesprengt. Dadurch werden die Stromverbindung über die Serienschaltung und somit auch der Stromfluss durch die Serienschaltung sicher unterbrochen.

Im Falle der gezielten Verjüngung einer Leiterbahn der Serienschaltung bildet ein verjüngter Abschnitt einer Leiterbahn, welche die Stromverbindung der Serienschaltung herstellt, die Überstromschutzeinheit. Durch die Verjüngung weist der Abschnitt eine vergleichsweise geringe Querschnittfläche und entsprechend einen vergleichsweise hohen ohmschen Widerstand zum Rest der Leiterbahn auf. Im Falle eines Über- bzw. Kurzstromes entsteht an dem verjüngten Abschnitt infolge des hohen Widerstands eine Hitzewicklung, wodurch dieser wie eine Schmelzsicherung durchschmilzt bzw. durchbrennt und dabei den Stromfluss durch die Serienschaltung unterbricht.

Bei Unregelmäßigkeiten bzw. in kritischen Zuständen in der Trennschaltung oder in den Bordnetzzweigen können die Bordnetzzweige somit zuverlässig voneinander elektrisch getrennt werden und ein ungewünschter Stromfluss zwischen den Bordnetzzweigen kann sicher unterbunden werden.

Bspw. weisen die erste und/oder die zweite Schaltereinheit jeweils einen Trennschalter auf, bspw. in Form von einem MOSFET-Schalter.

Bspw. weist die Trennschalteranordnung ferner eine erste Überspannungsschutzeinheit auf, die zwischen einem ersten Stromverbindungspunkt, der an dem Strompfad und zwischen einem Ersten der beiden Bordnetzzweige und der Trennschalteranordnung liegt, und der elektrischen Masse elektrisch angeschlossen ist und eingerichtet ist, die Trennschalteranordnung vor Überspannungen in dem ersten Bordnetzzweig zu schützen. Alternativ oder zusätzlich zu der ersten Überspannungsschutzeinheit weist die Trennschalteranordnung bspw. ferner eine zweite Überspannungsschutzeinheit auf, die zwischen einem zweiten Stromverbindungspunkt, der an dem Strompfad und zwischen einem Zweiten der beiden Bordnetzzweige und der Trennschalteranordnung liegt, und der elektrischen Masse elektrisch angeschlossen ist und eingerichtet ist, die Trennschalteranordnung vor Überspannungen in dem zweiten Bordnetzzweig zu schützen.

Bspw. weist die erste Überspannungsschutzeinheit eine erste, unidirektionale Suppressor-Diode (auf Englisch "Transient Voltage Suppressor Diode (TVS-Diode)") auf, die zwischen dem ersten Stromverbindungspunkt und der Masse elektrisch angeschlossen ist. Dabei ist die erste Suppressor-Diode derart angeschlossen, dass ihre Sperrrichtung vom ersten Stromverbindungspunkt zur Masse gerichtet ist. Analog weist die zweite Überspannungsschutzeinheit bspw. eine zweite, unidirektionale Suppressor-Diode auf, die zwischen dem zweiten Stromverbindungspunkt und der Masse elektrisch angeschlossen ist. Analog zu der ersten Überspannungsschutzeinheit ist die zweite Suppressor-Diode derart angeschlossen, dass ihre Sperrrichtung vom zweiten Stromverbindungspunkt zur Masse gerichtet ist.

Bspw. weisen die erste Suppressor-Diode und/oder die zweite Suppressor-Diode jeweils eine Durchbruchspannung auf, die unter einer kritischen (transienten) Überspannung liegen, welche zu einer Funktionsstörung bei der Trennschalteranordnung führen kann bzw. die Trennschalteranordnung dazu führen kann, ihren sicheren Arbeitsbereich (unkontrollierbar) zu verlassen. Also die Suppressor-Dioden werden in ihren jeweiligen Spannungslagen so gewählt, dass (transiente) Überspannungen in den beiden Bordnetzzweigen von den Suppressor-Dioden (weit) unter einer die Trennschalteranordnung, insb. deren Schaltereinheiten, störenden oder gar schädlichen Spannungshöhe begrenzt werden.

Die beiden Suppressor-Dioden leiten (transiente) Überspannungsspitzen in den jeweiligen Bordnetzzweigen ab und verhindern somit, dass die Trennschalteranordnung, insb. deren beiden Schaltereinheiten, durch die Überspannungsspitzen unnötigerweise vorzeitig ihren sicheren Arbeitsbereich verlassen und somit ihre Schutzwirkung verlieren. Dadurch schützen die beiden Suppressor-Dioden die Trennschalteranordnung und folglich auch das Bordnetz effektiv vor Störungen durch (transiente) Überspannungen.

Die beiden Suppressor-Dioden werden bei Erreichen ihrer jeweiligen Durchbruchspannungen leitend und begrenzen somit die Überspannung auf Höhe der jeweiligen Durchbruchspannungen. Die beiden Suppressor-Dioden werden dabei in ihrer Spannungslage so gewählt, dass die sicheren Arbeitsbereiche der beiden Schaltereinheiten bzw. der beiden Trennschalter niemals durch eine Überspannung verlassen werden. Eine Stromversorgung der beiden Dioden ist nicht notwendig.

Alternativ zu den Suppressor-Dioden können Halbleiterschaltungen, wie z. B. Klemmschaltungen, als Überspannungsschutzeinheiten eingesetzt werden, welche die gleiche Funktion bereitstellen.

Gemäß einem zweiten Aspekt der Erfindung wird ein Kraftfahrzeug, speziell ein elektrisch angetriebenes Fahrzeug, mit einem oben beschrieben Bordnetz bereitgestellt.

### Beschreibung der Zeichnung:

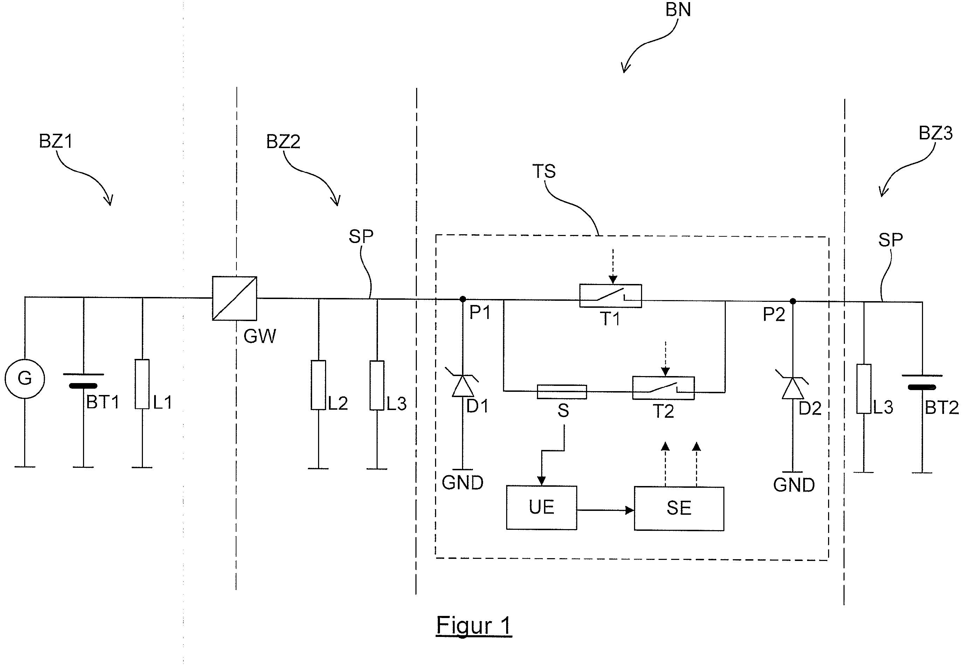

Im Folgenden wird eine beispielhafte Ausführungsform der Erfindung Bezug nehmend auf die beiliegende Zeichnung näher erläutert. Dabei zeigt die einzige Figur 1 in einer schematischen Schaltungstopologie ein Bordnetz BN eines elektrisch antreibbaren, teil- oder vollautomatisierten Kraftfahrzeug mit drei Bordnetzzweigen bzw. Bordnetzabschnitten BZ1, BZ2, BZ3, die in der Figur voneinander schematisch mit gestrichelten Linien getrennt gezeichnet sind.

Ein erster Bordnetzzweig BZ1 weist eine Bordnetz-Nennspannung von 48 Volt oder höher, wie z. B. 400 Volt, auf. In dem ersten Bordnetzzweig BZ1 sind Hochleistungs- bzw. Hochvoltkomponenten wie z. B. eine Traktionsbatterie BT1, ein Startergenerator G und eine elektrische Heizung L1 elektrisch angeschlossen. Über einen Gleichspannungswandler GW ist der erste Bordnetzzweig BZ1 mit dem zweiten und dem dritten Bordnetzzweig BZ2, BZ3 elektrisch verbunden.

Dabei ist der Bordnetzzweig BZ1 ein optionaler Bestandteil des Bordnetzes BN. Das Bordnetz BN kann (nur) den zweiten und den dritten Bordnetzzweig BZ2, BZ3 aufweisen, wobei in diesem Fall einer der beiden Bordnetzzweige BZ2, BZ3 einen Energiespeicher, wie z. B. eine 12 Volt Batterie BT2, als Energiequelle aufweisen kann.

Ein zweiter und ein dritter Bordnetzzweig BZ2, BZ3 weisen dieselbe Bordnetz-Nennspannung auf, wie z. B. von 12 Volt bzw. weit niedriger als 48 Volt. In dem zweiten Bordnetzzweig BZ2 sind sowohl Hochleistungskomponenten wie z. B. ein Scheinwerfer L2, als auch sicherheitsrelevanten Komponenten wie z. B. Komponenten eines Fahrsicherheitssystems L3 elektrisch angeschlossen. In dem dritten Bordnetzzweig BZ3 sind neben sicherheitsrelevanten Komponenten, wie z. B. Komponenten eines Fahrsicherheitssystems L3, noch ein Energiespeicher, wie z. B. eine Niederspannungsbatterie, elektrisch angeschlossen. Dabei können die sicherheitsrelevanten Komponenten L3 redundant ausgeführt und jeweils in dem zweiten und dem dritten Bordnetzzweig BZ2, BZ3 verteilt angeordnet sein.

Das Bordnetz BN weist ferner optional einen, insb. galvanisch getrennten oder semi-galvanisch getrennten, vorzugsweise bi-direktionalen Gleichspannungswandler bekannter Art auf, der zwischen dem ersten und dem zweiten Bordnetzzweig BZ1, BZ2 elektrisch angeschlossen ist und eingerichtet ist, zwischen den unterschiedlichen Spannungsniveaus der Nennspannungen der beiden Bordnetzzweige BZ1, BZ2 umzuwandeln und somit einen, vorzugsweise bi-direktionalen, Stromfluss zwischen diesen beiden Bordnetzzweigen BZ1, BZ2 herzustellen.

Das Bordnetz BN weist ferner eine Trennschalteranordnung TS zum Schutz des zweiten bzw. des dritten Bordnetzzweigs BZ2, BZ3 vor Störungen in dem jeweils anderen der beiden Bordnetzzweige BZ2, BZ3 auf.

Die Trennschalteranordnung TS ist zwischen dem zweiten und dem dritten Bordnetzzweig BZ2 und BZ3, bzw. in einem positivspannungs-seitigen Strompfad SP zwischen diesen beiden Bordnetzzweigen BZ2, BZ3 elektrisch angeschlossen. Die Trennschalteranordnung TS ist eingerichtet, in einem kritischen Zustand bei einem der beiden Bordnetzzweige BZ2, BZ3 die beiden Bordnetzzweige BZ2, BZ3 voneinander elektrisch zu trennen und somit Stromfluss zwischen den beiden Bordnetzzweigen BZ2, BZ3 über den Strompfad SP zu unterbrechen. Entsprechend ist die Trennschalteranordnung TS auch eingerichtet, in unkritischen, normalen Betriebszuständen bei den beiden Bordnetzzweigen BZ2, BZ3 die beiden Bordnetzzweige BZ2, BZ3 miteinander elektrisch zu verbinden und somit einen Stromfluss zwischen den beiden Bordnetzzweigen BZ2, BZ3 über den Strompfad SP zu ermöglichen.

Hierzu weist die Trennschalteranordnung TS eine erste steuerbare Schaltereinheit T1 sowie eine Serienschaltung von einer zweiten steuerbaren Schaltereinheit T2 und einer Überstromschutzeinheit S auf. Dabei sind die erste Schaltereinheit und die Serienschaltung zueinander parallel in dem Strompfad SP elektrisch angeschlossen. Die erste Schaltereinheit T1 weist einen ersten steuerbaren Trennschalter auf bzw. als ein erster Trennschalter ausgeführt, der bspw. aus einem MOSFET gebildet ist. Die zweite Schaltereinheit T2 weist einen zweiten steuerbaren Trennschalter auf bzw. als ein zweiter Trennschalter ausgeführt, der bspw. aus einem weiteren MOSFET gebildet ist. Die Überstromschutzeinheit S weist eine Schmelzsicherung auf, die seriell zu dem zweiten Trennschalter T2 elektrisch angeschlossen ist.

Die Trennschalteranordnung TS weist ferner eine Steuereinheit SE mit zwei (logischen) Steuersignalausgängen auf, die über deren Steuersignalausgänge steuersignalausgangsseitig mit der ersten und der zweiten Schaltereinheit bzw. mit Steuersignaleingängen der jeweiligen Trennschalter T1, T2 signaltechnisch verbunden ist und zum Ansteuern der Trennschalteranordnung TS bzw. der beiden Trennschalter T1, T2 eingerichtet ist.

Die Trennschalteranordnung TS weist außerdem eine Überwachungseinheit UE mit einem Signalausgang auf, die über dessen Signalausgang signalausgangsseitig mit einem Signaleingang der Steuereinheit SE signaltechnisch verbunden ist und eingerichtet ist, in einer dem Fachmann bekannten Weise, wie z. B. durch Messen einer über der Schmelzsicherung S abfallenden Spannung, den Zustand der Überstromschutzeinheit bzw. der Schmelzsicherung S zu überwachen und entsprechend dem Zustand der Schmelzsicherung S durch Ausgabe eines Signals an die Steuereinheit SE diese dazu veranlassen, den Stromfluss über den Strompfad SP zwischen den beiden Bordnetzzweigen BZ2, BZ3 herzustellen oder zu unterbrechen.

Die Trennschalteranordnung TS weist zudem eine erste Überspannungsschutzeinheit bspw. mit einer ersten unidirektionalen Suppressor-Diode D1 auf, die zwischen einem ersten Stromverbindungspunkt P1, der an dem Strompfad SP und zwischen dem zweiten Bordnetzzweig BZ2 und der Trennschalteranordnung TS liegt, und der elektrischen Masse GND elektrisch angeschlossen ist. Dabei ist die Sperrrichtung der ersten Suppressor-Diode D1 vom ersten Stromverbindungspunkt P1 zur Masse GND gerichtet. Die erste Überspannungsschutzeinheit bzw. die erste Suppressor-Diode D1 ist eingerichtet, die Trennschalteranordnung TS, insb. deren Trennschalter T1, T2, sowie die Schaltungskomponenten, insb. die sicherheitsrelevanten Stromverbraucher L2, L3 in dem zweiten Bordnetzzweig BZ2 vor (transienten) Überspannungen in dem zweiten Bordnetzzweig BZ2 zu schützen.

Analog weist die Trennschalteranordnung TS ferner eine zweite Überspannungsschutzeinheit bspw. mit einer zweiten unidirektionalen Suppressor-Diode D2 auf, die zwischen einem zweiten Stromverbindungspunkt P2, der an dem Strompfad SP und zwischen dem dritten Bordnetzzweig BZ3 und der Trennschalteranordnung TS liegt, und der elektrischen Masse GND elektrisch angeschlossen ist. Dabei ist die Sperrrichtung der zweiten Suppressor-Diode D2 vom zweiten Stromverbindungspunkt P2 zur Masse GND gerichtet. Die zweite Überspannungsschutzeinheit bzw. die zweite Suppressor-Diode D2 ist analog zu der ersten Überspannungsschutzeinheit bzw. der ersten Suppressor-Diode D1 eingerichtet, die Trennschalteranordnung TS, insb. deren Trennschalter T1, T2, sowie die Schaltungskomponenten, insb. die sicherheitsrelevanten Stromverbraucher L3 in dem dritten Bordnetzzweig BZ3 vor (transienten) Überspannungen in dem dritten Bordnetzzweig BZ3 zu schützen.

Die Trennschalteranordnung TS oder zumindest deren Überwachungseinheit UE und Steuereinheit SE sind bspw. Teil einer übergeordneten Bordnetzüberwachungs- und -steueranordnung.

Nachdem die Topologie der Trennschalteranordnung TS anhand von Figur 1 detailliert beschrieben wurde, wird nachfolgend deren Funktion näher beschrieben:
Wie bei vielen sicherheitsrelevanten Vorrichtungen wird bei einem elektrisch antreibbaren, teil- oder vollautomatisierten Kraftfahrzeug eine redundante und voneinander unabhängige Stromversorgung von verschiedenen Aktuatoren und Controllern immer wichtiger. Dies wird maßgeblich getrieben durch die Einführung von neuen sicherheitsrelevanten Fahrzeugfunktionen, wie z. B. einer X-By-Wire-Steuerung bzw. einem teil- oder vollautomatisierten Fahren. Um eine Redundanz in der Stromversorgung zu erzielen wird das Bordnetz BN wie oben beschrieben mit zwei teils zueinander redundanten Bordnetzzweigen, nämlich dem zweiten und dem dritten Bordnetzzeig BZ2, BZ3 "doppelt" ausgeführt. Der Ausdruck "teils zueinander redundant" bedeutet, dass die beiden zueinander redundanten Bordnetzzweige BZ2, BZ3 sowohl voneinander unabhängig und zueinander redundant dieselbe sicherheitsrelevanten Stromverbraucher L3 mit Strom versorgen, aber auch voneinander getrennt jeweils den jeweiligen Bordnetzzweigen BZ2, BZ3 zugeordnete unterschiedliche Stromverbraucher L2 mit Strom versorgen.

Die Aufteilung des Bordnetzes BN in zwei zueinander redundante Bordnetzzweige BZ2, BZ3 ist wesentlich einfacher und kostengünstiger als eine doppelte Bordnetz-Ausführung mit zwei, insb. voneinander galvanisch getrennten, Bordnetzen. Darüber hinaus funktioniert das Bordnetz BN mit den zueinander redundanten Bordnetzzweigen BZ2, BZ3 in einem Störungsfall in einem der beiden Bordnetzzweige BZ2, BZ3 zuverlässiger als bei einer doppelten Bordnetz-Ausführung.

Dabei sorgt die oben beschriebene Trennschalteranordnung TS dafür, dass die Stromversorgung zur Durchführung der sicherheitsrelevanten Funktionen, wie z. B. der X-By-Wire-Steuerung, im Falle einer Störung in einem der Bordnetzzweige BZ2, BZ3 weiterhin zuverlässig aufrechterhalten bleibt.

Um jedoch eine zuverlässige Stromversorgung, insb. für die sicherheitsrelevanten Funktionen, zu gewährleisten und Folgeschäden bei einer Störung in einem der Bordnetzzweige BZ2, BZ3 zu vermeiden, sollte die Störung in einem der Bordnetzzweige BZ2, BZ3 jederzeit, insb. unmittelbar nach deren Eintritt, rasch erkannt werden, und deren Folgeschäden durch Ergreifen von Gegenmaßnahmen vermieden werden.

Ein sicherer Betriebszustand der Trennschalteranordnung TS außerhalb der Spezifikation bzw. ein Verlassen eines sicheren Arbeitsbereichs der Trennschalteranordnung TS, insb. des ersten Trennschalters T1, muss dabei zu jedem Zeitpunkt, insb. in einem Ruhemodus des Bordnetzes BN, vermieden werden. Wird der sichere Arbeitsbereich verlassen, so kann die Trennschalteranordnung TS, insb. der erste Trennschalter T1, nicht mehr abgesichert betrieben werden.

In einem fehlerfreien Betriebsmodus des Bordnetzes BN, in dem sich das Fahrzeug in einem Fahrbetrieb befindet, kann die Diagnose von Störungen in den Bordnetzzweigen BZ2, BZ3 in der Regel von der zuvor erwähnten, übergeordneten Bordnetzüberwachungs- und -steueranordnung erfolgt werden, die zumindest von einem der beiden Bordnetzzweige BZ2, BZ3 mit einem ausreichenden Betriebsstrom versorgt wird. Die übergeordnete Anordnung leitet beim Erkennen von Störungen auch Gegenmaßnahmen zur Vermeidung von Folgeschäden ein.

In einem Ruhemodus des Bordnetzes BN, in dem das Fahrzeug abgestellt und somit nicht im Fahrbetrieb ist, steht der übergeordneten Anordnung keinen ausreichenden Betriebsstrom, in der Regel maximal 100 µA an Strom, zur Verfügung, der erforderlich ist, um eine zuverlässige Diagnose von Störungen in den Bordnetzzweigen BZ2, BZ3 durchzuführen und Gegenmaßnahmen zur Vermeidung von Folgeschäden einzuleiten.

In diesem Fall tritt die zuvor beschriebene Trennschalteranordnung TS an der Stelle der übergeordneten Anordnung ein und aktiviert beim Eintreten von Störungen in den Bordnetzzweigen BZ2, BZ3 mit deren nachfolgend zu beschreibenden Funktionsweise autonom geeignete Gegenmaßnahmen und verhindert somit Folgeschäden an der Trennschalteranordnung TS, insb. an dem sicherheitsrelevanten ersten Trennschalter T1. Als Binderglied der beiden Bordnetzzweige BZ2, BZ3 muss eine fehlerfreie Funktionalität der Trennschalteranordnung TS jederzeit diagnostizierbar sein. Insb. muss eine Diagnose eines Fehlerfalls der Trennschalteranordnung TS auch in der Phase des Ruhemodus des Bordnetzes BN sichergestellt sein.

In der Regel führen Störungen in den Bordnetzzweigen BZ2, BZ3 zu Überströmen, insb. Kurzschlussströmen, und/oder Überspannungen in den Bordnetzzweigen BZ2, BZ3 bzw. gehen mit Überströmen und/oder Überspannungen einher. Die Überströme bzw. Überspannungen führen wiederum zu Folgeschäden bei den, insb. sicherheitsrelevanten, Stromverbrauchern in den Bordnetzzweigen BZ2, BZ3.

Die Trennschalteranordnung TS schützt während eines Ruhemodus das Bordnetz BN vor (weiteren) Folgeschäden, die durch einen Überstrom bzw. einen Kurzschlussstrom in einem der Bordnetzzweige BZ2, BZ3 hervorgerufen werden können.

Hierzu schaltet die Trennschalteranordnung TS - sobald das Bordnetz BN von einem Betriebsmodus in den Ruhemodus übergeht - über deren Steuereinheit SE den ersten Trennschalter T1 in einen offenen, stromsperrenden Schaltzustand und hält den ersten Trennschalter T1 über die gesamte Phase des Ruhemodus in diesem stromsperrenden Schaltzustand. Zugleich schaltet die Trennschalteranordnung TS über die Steuereinheit SE den zweiten Trennschalter T2 der Serienschaltung SS in einen geschlossenen, stromleitenden Schaltzustand hält den zweiten Trennschalter T2 über die gesamte Phase des Ruhemodus in diesem stromleitenden Schaltzustand. Dadurch bildet sich im Ruhemodus des Bordnetzes BN ein Stromübertragungsweg zwischen den beiden Bordnetzzweigen BZ2, BZ3 über die Serienschaltung SS bzw. über die Schmelzsicherung S der Überstromschutzeinheit.

Entsteht infolge einer Störung in einem der beiden Bordnetzzweige BZ2, BZ3, bspw. in dem zweiten Bordnetzzweig BZ2, ein Kurzschlussstrom (bzw. ein Überstrom), so "versucht" dieser von dem einen bzw. dem zweiten Bordnetzzweig BZ2 über die Serienschaltung SS in den anderen bzw. den dritten Bordnetzzweig BZ3 zu fließen. Überschreitet dabei die Stromstärke des Kurzstromes über eine vorbestimmte Zeit einen vorbestimmten Wert, so schmilzt die Schmelzsicherung S der Überstromschutzeinheit der Serienschaltung SS und der Fluss des Kurzschlussstromes von dem zweiten Bordnetzzweig BZ2 in den dritten Bordnetzzweig BZ3 wird unterbrochen. Der dritte Bordnetzzweig BZ3 wird somit vor Schäden durch den Kurzschlussstrom von dem zweiten Bordnetzzweig BZ2 geschützt. Dabei wird die Schmelzsicherung S so gewählt, dass diese abschmilzt, bevor der Kurzschlussstrom aus einem der beiden Bordnetzzweige BZ2, BZ3 über die Schmelzsicherung S auf den jeweils anderen Bordnetzzweig BZ3, BZ2 übergreift und auch in diesem anderen Bordnetzzweig BZ3, BZ2, insb. bei den sicherheitsrelevanten Stromverbrauchern in diesem anderen Bordnetzzweig BZ3, BZ2, Schäden anrichtet.

Das Unterbrechen des Stromflusses in der Serienschaltung SS durch die geschmolzene Schmelzsicherung S während des Ruhemodus wird spätestens beim Übergang in den anschließenden

Beim Übergang von dem Ruhemodus in den Betriebsmodus erkennt die Trennschalteranordnung TS über die Überwachungseinheit UE in einer dem Fachmann bekannten Weise, wie z. B. durch Messen einer über die Schmelzsicherung S abfallenden Spannung, dass die Schmelzsicherung S während des Ruhemodus geschmolzen ist und erkennt somit, dass während des Ruhemodus in einem der beiden Bordnetzzweige BZ2, BZ3 ein Überstrom floss, bzw. ein Kurzschluss vorlag.

Entsprechend erkennt die Überwachungseinheit UE, dass die Trennschalteranordnung TS, insb. der zweite Trennschalter T2, möglicherweise (und zumindest zweitweise) ihren sicheren Arbeitsbereich verlassen hat oder gar (dauerhaft) beschädigt ist, und folglich im nachfolgenden Betriebsmodus keinen sicheren Betrieb des Bordnetzes BN mehr garantieren kann. In diesem Fall veranlasst die Trennschalteranordnung TS über die Überwachungseinheit UE die Steuereinheit SE dazu, sowohl den ersten Trennschalter T1 und als auch den zweiten Trennschalter T2 in den offenen, stromsperrenden Schaltzustand zu schalten bzw. in diesem stromsperrenden Schaltzustand zu halten. Dadurch verhindert die Trennschalteranordnung TS, dass nach einem Kurzschlussfall in einem der beiden Bordnetzzweige BZ2, BZ3 während des Ruhemodus eine ggfs. gefährliche Stromverbindung zwischen den beiden Bordnetzzweigen BZ2, BZ3 hergestellt wird. Damit verhindert die Trennschalteranordnung TS einen Start des Bordnetzes BZ bzw. des Fahrzeugs nach einem Kurzschlussfall während des Ruhemodus. Darüber hinaus gibt die Trennschalteranordnung TS über die Überwachungseinheit UE ein Warnsignal aus, das signalisiert, eine Werkstatt aufzusuchen.

Ist die Schmelzsicherung S während des Ruhezustands abgeschmolzen und somit der Stromfluss über die Serienschaltung SS unterbrochen, so wird erkannt, dass sich die Trennschalteranordnung TS, bzw. der erste und der zweite Trennschalter T1, T2, möglichweise zumindest zeitweise den sicheren Arbeitsbereich verlassen hat. In diesem Fall kann eine Beschädigung der Trennschalteranordnung TS bzw. der beiden Trennschalter T1, T2 nicht mehr ausgeschlossen werden. Beim Übergang von dem Ruhemodus in den Betriebsmodus wird dieser Vorfall an die übergeordnete Bordnetzüberwachungs- und -steueranordnung gemeldet, die wiederum veranlasst, dass ein Aktivieren von sicherheitsrelevanten Fahrzeugfunktionen, wie z. B. einem automatisierten Fahren, unterbunden wird und ein sicherer Fahrzeugzustand eingeleitet wird, wie z.B. eine Stilllegung des Fahrzeugs.

Ist die Schmelzsicherung S während des Ruhemodus nicht geschmolzen, so geht die Trennschalteranordnung TS bzw. die Überwachungseinheit UE davon aus, dass sowohl die Trennschalteranordnung TS als auch die beiden Bordnetzzweige BZ2, BZ3 intakt sind. In diesem Fall veranlasst die Überwachungseinheit UE beim Übergang von dem Ruhemodus in den Betriebsmodus die Steuereinheit SE dazu, den ersten Trennschalter T1 in den geschlossenen, stromleitenden Schaltzustand zu schalten und zugleich den zweiten Trennschalter T2 in den offenen, stromsperrenden Schaltzustand zu schalten. Dadurch stellt die Trennschalteranordnung TS einen ungehinderten Stromfluss zwischen beiden Bordnetzzweigen BZ2, BZ3 während des Betriebsmodus her.

Die Trennschalteranordnung TS schützt zudem das Bordnetz BN während des Ruhemodus (aber auch während des Betriebsmodus) vor (weiteren) Folgeschäden, die durch Überspannungen in den Bordnetzzweigen BZ2, BZ3 hervorgerufen werden können.

In erster Linie erfolgt dies in einfacher Weise durch einen Eigenschutz der Trennschalteranordnung TS vor den Schäden durch die Überspannungen in den Bordnetzzweigen BZ2, BZ3. Dabei erfolgt der Schutz mithilfe von den beiden Überspannungsschutzeinheiten mit ihren jeweiligen Suppressor-Dioden D1, D2. Die beiden Suppressor-Dioden D1, D2 sind in ihren Spannungslagen so gewählt, dass deren Durchbruchspannungen jeweils unter einer kritischen Spannungshöhe liegen, welche die Trennschalteranordnung TS, insb. deren beiden Trennschalter T1, T2 beschädigen kann.

Die beiden Suppressor-Dioden D1, D2 leiten (transiente) Überspannungsspitzen in den jeweiligen den Bordnetzzweigen BZ2, BZ3, die höher als die Durchbruchspannungen der jeweiligen Suppressor-Dioden D1, D2 und somit höher als die kritische Spannung der Trennschalteranordnung TS liegen, über die elektrische Masse GND ab und schützen somit die Trennschalteranordnung TS bzw. die beiden Trennschalter T1, T2 der Trennschalteranordnung TS vor einer Störung bzw. Beschädigung durch die Überspannungsspitzen. Damit stellen die beiden Überspannungsschutzeinheiten mit ihren jeweiligen Suppressor-Dioden D1, D2 in erster Linie sicher, dass die Trennschalteranordnung TS bzw. deren beiden Trennschalter T1, T2 nicht durch die (transienten) Überspannungsspitzen unnötigerweise ihren sicheren Arbeitsbereich verlassen und somit ihre Schutzwirkung verlieren.

Vorzugsweise sind die Durchbruchspannungen der beiden Suppressor-Dioden D1, D2 zudem ausreichend niedrig gewählt, dass auch die Schaltungskomponenten, insb. die sicherheitsrelevanten Stromverbraucher, in den beiden Bordnetzzweigen BZ2, BZ3 nicht durch die (transienten) Überspannungsspitzen beschädigt werden.

Da die beiden Suppressor-Dioden D1, D2 für ihre Schutzfunktion keinen Versorgungsstrom brauchen, können diese auch im Ruhemodus die Trennschalteranordnung TS und das Bordnetz BN vor den (transienten) Überspannungsspitzen wirksam schützen. Beim Erreichen der jeweiligen Durchbruchspannungen werden die Suppressor-Dioden D1, D2 einfach leitend und begrenzen somit die (transienten) Überspannungsspitzen auf die sowohl für die Trennschalteranordnung TS als auch für das Bordnetz BN ungefährliche Spannungshöhe.

Die Trennschalteranordnung TS ermöglicht somit, eine zuverlässige Diagnose einer möglichen Beschädigung der Trennschalteranordnung TS, insb. des ersten Trennschalters TS1, während des Ruhemodus des Fahrzeuges bzw. des Bordnetzes BZ zu treffen. Dabei wird die mögliche Beschädigung beim Übergang von dem Ruhemodus in den anschließenden Betriebsmodus bzw. bei einem anschließenden Fahrzeug-Start von der Trennschalteranordnung TS erkannt und bspw. der übergeordneten Bordnetzüberwachungs- und - steueranordnung gemeldet, die dann geeignete Maßnahmen zum Schutz des Bordnetzes BN einleitet. Dabei verbraucht die Trennschalteranordnung TS in dem Ruhemodus einen Ruhestrom von weniger als 100 µA.

## Patentansprüche

1. Bordnetz (BZ), aufweisend:
- mindestens zwei Bordnetzzweige (BZ2, BZ3), die miteinander über einen positivspannungsseitigen Strompfad (SP) elektrisch verbunden sind und jeweils mindestens einen Stromverbraucher (L2, L3) aufweisen,
- eine Trennschalteranordnung (TS), die in dem Strompfad (SP) zwischen den beiden Bordnetzzweigen (BZ2, BZ3) elektrisch angeschlossen ist und eingerichtet, in einem kritischen Zustand bei einem der beiden Bordnetzzweige (BZ2, BZ3) einen Stromfluss über den Strompfad (SP) zu unterbrechen;
- wobei die Trennschalteranordnung (TS) eine erste steuerbare Schaltereinheit (T1) und eine Serienschaltung (SS) von einer zweiten steuerbaren Schaltereinheit (T2) und einer Überstromschutzeinheit (S) aufweist, wobei die erste Schaltereinheit und die Serienschaltung zueinander parallel in dem Strompfad (SP) zwischen den beiden Bordnetzzweigen (BZ2, BZ3) elektrisch angeschlossen sind;
- wobei die Trennschalteranordnung (TS) ferner eine Steuereinheit (SE) zum Ansteuern der Trennschalteranordnung (TS) aufweist, die steuersignalausgangsseitig mit der ersten (T1) und der zweiten (T2) Schaltereinheit signaltechnisch verbunden ist, dadurch gegengezeichnet, dass die Trennschalteranordnung (TS) eingerichtet ist, in einem Ruhemodus des Bordnetzes (BZ) die erste Schaltereinheit (T1) in einem offenen, stromsperrenden Schaltzustand zu schalten und die zweite Schaltereinheit (T2) in einem geschlossenen, stromleitenden Schaltzustand zu schalten;
- wobei die Überstromschutzeinheit (S) ferner eingerichtet ist, im Ruhemodus und im Falle eines Überstromes in der Serienschaltung (SS) den Stromfluss über die Serienschaltung (SS) zu unterbrechen.

2. Bordnetz (BZ) nach Anspruch 1, wobei die Steuereinheit ferner eingerichtet ist, in einem Betriebsmodus des Bordnetzes (BZ) die erste Schaltereinheit (T1) in einem stromleitenden Schaltzustand zu schalten und die zweite Schaltereinheit (T2) in einem stromsperrenden Schaltzustand zu schalten.

3. Bordnetz (BZ) nach Anspruch 1 oder 2, wobei,
- die Trennschalteranordnung (TS) ferner eine Überwachungseinheit (UE) aufweist, die signalausgangsseitig mit einem Signaleingang der Steuereinheit (SE) signaltechnisch verbunden ist und eingerichtet ist, den Zustand der Überstromschutzeinheit (S) zu überwachen und im Falle, dass die Überstromschutzeinheit (S) ihre Schutzwirkung verliert, durch Ausgabe eines Zustandswarnsignals die Steuereinheit (SE) dazu veranlassen, bei einem Übergang von dem Ruhemodus in den Betriebsmodus die erste Schaltereinheit (T1) in dem offenen stromsperrenden Schaltzustand zu halten.

4. Bordnetz (BZ) nach einem der vorangehenden Ansprüche, wobei die Überstromschutzeinheit (S) eine Schmelzsicherung oder eine Pyro-Fuse aufweist.

5. Bordnetz (BZ) nach einem der Ansprüche 1 bis 3, wobei die Überstromschutzeinheit (S) eine Leiterbahn mit einem verjüngten Abschnitt aufweist, der Teil der Stromverbindung der Serienschaltung (SS) bildet und derart geformt ist, dass dieser im Falle des Überstromes in der Serienschaltung (SS) durchschmilzt und somit die Stromverbindung über die Serienschaltung (SS) unterbricht.

6. Bordnetz (BZ) nach einem der vorangehenden Ansprüche, wobei die erste (T1) und/oder die zweiter Schaltereinheit (T2) jeweils einen Trennschalter oder einen Halbleiter-Trennschalter oder einen MOSFET-Trennschalter aufweisen.

7. Bordnetz (BZ) nach einem der vorangehenden Ansprüche, wobei
- die Trennschalteranordnung (TS) ferner eine erste Überspannungsschutzeinheit (D1) aufweist, die zwischen einem ersten Stromverbindungspunkt (P1), der an dem Strompfad (SP) und zwischen einem Ersten der beiden Bordnetzzweige (BZ2) und der Trennschalteranordnung (TS) liegt, und einer elektrischen Masse (GND) elektrisch angeschlossen ist und eingerichtet ist, die Trennschalteranordnung (TS) vor Überspannungen im ersten Bordnetzzweig (BZ2) zu schützen; und/oder
- die Trennschalteranordnung (TS) ferner eine zweite Überspannungsschutzeinheit (D2) aufweist, die zwischen einem zweiten Stromverbindungspunkt (P2), der an dem Strompfad (SP) und zwischen einem Zweiten der beiden Bordnetzzweige (BZ3) und der Trennschalteranordnung (TS) liegt, und der elektrischen Masse (GND) elektrisch angeschlossen ist und eingerichtet ist, die Trennschalteranordnung (TS) vor Überspannungen im zweiten Bordnetzzweig (BZ3) zu schützen.

8. Bordnetz (BZ) nach Anspruch 7, wobei,
- die erste Überspannungsschutzeinheit (D1) eine erste, unidirektionale Suppressor-Diode aufweist, die zwischen dem ersten Stromverbindungspunkt (P1) und der Masse (GND) elektrisch angeschlossen ist, wobei die Sperrrichtung der ersten Suppressor-Diode vom ersten Stromverbindungspunkt (P1) zur Masse (GND) gerichtet ist; und/oder
- die zweite Überspannungsschutzeinheit (D2) eine zweite, unidirektionale Suppressor-Diode aufweist, die zwischen dem zweiten Stromverbindungspunkt (P2) und der Masse (GND) elektrisch angeschlossen ist, wobei die Sperrrichtung der zweiten Suppressor-Diode vom zweiten Stromverbindungspunkt (P2) zur Masse (GND) gerichtet ist.

9. Bordnetz (BZ) nach Anspruch 8, wobei, die erste und/oder die zweite Suppressor-Diode jeweils eine Durchbruchspannung aufweisen, die unter einer kritischen Spannung liegen, welche zu einer Funktionsstörung bei der Trennschalteranordnung (TS) führen kann.

10. Bordnetz (BZ) nach Anspruch 7, wobei die erste (D1) und/oder die zweite (D2) Überspannungsschutzeinheit jeweils eine Klemmschaltung aufweisen.

11. Kraftfahrzeug oder ein elektrisch angetriebenes Kraftfahrzeug, das ein Bordnetz (BZ) nach einem der vorangehenden Ansprüche aufweist.

## Claims

1. Vehicle electrical system (BZ), having:
- at least two electrical system branches (BZ2, BZ3) which are electrically connected to each other via a positive voltage-side current path (SP) and each having at least one electrical device (L2, L3);
- a disconnecting switch arrangement (TS) which is electrically connected in the current path (SP) between the two electrical system branches (BZ2, BZ3) and, in the event of a critical state in one of the two electrical system branches (BZ2, BZ3), is configured to interrupt a current flow via the current path (SP);
- wherein the disconnecting switch arrangement (TS) has a first controllable switch unit (T1) and a series circuit (SS) of a second controllable switch unit (T2) and an overcurrent protection unit (S), wherein the first switch unit and the series circuit are electrically connected to each other in parallel in the current path (SP) between the two electrical system branches (BZ2, BZ3);
- wherein the disconnecting switch arrangement (TS) also has a control unit (SE) for actuating the disconnecting switch arrangement (TS), which is connected in a signal-carrying way on its control signal output side to the first switch unit (T1) and the second switch unit (T2), **characterised in that** the disconnecting switch arrangement (TS) is configured, in an idle mode of the vehicle electrical system (BZ), to switch the first switch unit (T1) into an open, current-disconnecting switching state and to switch the second switch unit (T2) into a closed, current-carrying switching state;
- wherein the overcurrent protection unit (S) is further configured, in the idle mode and in the event of an overcurrent in the series circuit (SS), to interrupt the current flow via the series circuit (SS).

2. Vehicle electrical system (BZ) according to claim 1, wherein the control unit is further configured, in an operating mode of the vehicle electrical system (BZ), to switch the first switch unit (T1) into a current-carrying switching state and to switch the second switch unit (T2) into a current-disconnecting switching state.

3. Vehicle electrical system (BZ) according to claim 1 or 2, wherein
- the disconnecting switch arrangement (TS) also has a monitoring unit (UE), which is connected in a signal-carrying way on its signal output side to a signal input of the control unit (SE), and is configured to monitor the state of the overcurrent protection unit (S) and, in the event that the overcurrent protection unit (S) loses its protective function, prompts the control unit (SE) by outputting a state-warning signal to keep the first switch unit (T1) in the open current-disconnecting switching state in a transition from the idle mode to the operating mode.

4. Vehicle electrical system (BZ) according to any one of the preceding claims, wherein the overcurrent protection unit (S) has a melting fuse or a pyro fuse.

5. Vehicle electrical system (BZ) according to any one of claims 1 to 3, wherein the overcurrent protection unit (S) has a conductor path with a tapered segment, which is a part of the current connection of the series circuit (SS) and is formed so that it melts in the event of an overcurrent in the series circuit (SS) and thus interrupts the current connection via the series circuit (SS).

6. Vehicle electrical system (BZ) according to any one of the preceding claims, wherein the first (T1) and/or the second switch unit (T2) each has a disconnecting switch or a semiconductor disconnecting switch or a MOSFET disconnecting switch.

7. Vehicle electrical system (BZ) according to any one of the preceding claims, wherein
- the disconnecting switch arrangement (TS) also has a first overvoltage protection unit (D1), which is electrically connected between a first current connection point (P1), which lies on the current path (SP) and between a first of the two electrical system branches (BZ2) and the disconnecting switch arrangement (TS), and an electrical ground (GND) and is configured to protect the disconnecting switch arrangement (TS) from overvoltages in the first electrical system branch (BZ2); and/or
- the disconnecting switch arrangement (TS) also has a second overvoltage protection unit (D2), which is electrically connected between a second current connection point (P2), which lies on the current path (SP) and between a second of the two electrical system branches (BZ3) and the disconnecting switch arrangement (TS), and the electrical ground (GND) and is configured to protect the disconnecting switch arrangement (TS) from overvoltages in the second electrical system branch (BZ3).

8. Vehicle electrical system (BZ) according to claim 7, wherein
- the first overvoltage protection unit (D1) has a first unidirectional suppression diode, which is electrically connected between the first current connection point (P1) and the ground (GND), wherein the reverse direction of the first suppression diode is directed from the first current connection point (P1) to the ground (GND); and/or
- the second overvoltage protection unit (D2) has a second unidirectional suppression diode, which is electrically connected between the second current connection point (P2) and the ground (GND), wherein the reverse direction of the second suppression diode is directed from the second current connection point (P2) to the ground (GND).

9. Vehicle electrical system (BZ) according to claim 8, wherein the first and/or the second suppression diode respectively has a breakdown voltage which is below a critical voltage that can lead to a malfunction in the disconnecting switch arrangement (TS).

10. Vehicle electrical system (BZ) according to claim 7, wherein the first (D1) and/or the second (D2) overvoltage protection unit respectively has a clamping circuit.

11. Motor vehicle or an electrically driven motor vehicle that has a vehicle electrical system (BZ) according to any one of the preceding claims.

## Revendications

1. Réseau embarqué (BZ), présentant :
- au moins deux branches de réseau embarqué (BZ2, BZ3), qui sont reliées électriquement entre elles par le biais d'un trajet de courant (SP) côté tension positive et qui présentent respectivement un consommateur d'électricité (L2, L3) ;
- un ensemble d'interrupteur de séparation (TS), qui est raccordé électriquement dans le trajet de courant (SP) entre les deux branches de réseau embarqué (BZ2, BZ3) et configuré pour interrompre, dans un état critique pour l'une des deux branches de de réseau embarqué (BZ2, BZ3), un flux de courant par le biais du trajet de courant (SP) ;
- dans lequel l'ensemble d'interrupteur de séparation (TS) présente une première unité de commutation (T1) commandable et un montage en série (SS) d'une seconde unité de commutation (T2) commandable et d'une unité de protection contre les surintensités (S), dans lequel la première unité de commutation et le montage en série sont raccordés électriquement l'un à l'autre en parallèle dans le trajet de courant (SP) entre les deux branches de réseau embarqué (BZ2, BZ3) ;
- dans lequel l'ensemble d'interrupteur de séparation (TS) présente en outre une unité de commande (SE) pour commander l'ensemble d'interrupteur de séparation (TS), qui est relié du point de vue technique de signalisation côté sortie de signal de commande avec la première (T1) et la seconde (T2) unité de commutation, **caractérisé en ce que** l'ensemble d'interrupteur de séparation (TS) est configuré, dans un mode veille du réseau embarqué (BZ), pour commuter la première unité de commutation (T1) dans un état de commutation ouvert de blocage de courant et pour commuter la seconde unité de commutation (T2) dans un état de commutation fermé électroconducteur ;
- dans lequel l'unité de protection contre les surintensités (S) est configurée en outre pour interrompre le flux de courant par le biais du montage en série (SS) en mode veille et dans le cas d'une surintensité dans le montage en série (SS).

2. Réseau embarqué (BZ) selon la revendication 1, dans lequel l'unité de commande est configurée en outre pour commuter dans un mode de fonctionnement du réseau embarqué (BZ) la première unité de commutation (T1) dans un état de commutation électroconducteur et pour commuter la seconde unité de commutation (T2) dans un état de commutation de blocage de courant.

3. Réseau embarqué (BZ) selon la revendication 1 ou 2, dans lequel,
- l'ensemble d'interrupteur de séparation (TS) présente en outre une unité de surveillance (UE), qui est reliée du point de vue technique de signalisation côté sortie de signal avec une entrée de signal de l'unité de commande (SE) et configurée pour surveiller l'état de l'unité de protection contre les surintensités (S) et dans le cas où l'unité de protection contre les surintensités (S) perd son effet protecteur, pour amener l'unité de commande (SE) par l'émission d'un signal d'avertissement d'état, lors d'un passage du mode veille au mode de fonctionnement, à maintenir la première unité de commutation (T1) dans l'état de commutation ouvert de blocage de courant.

4. Réseau embarqué (BZ) selon l'une quelconque des revendications précédentes, dans lequel l'unité de protection contre les surintensités (S) présente un fusible ou un fusible Pyro.

5. Réseau embarqué (BZ) selon l'une quelconque des revendications 1 à 3, dans lequel l'unité de protection contre les surintensités (S) présente une piste conductrice avec une section conique, qui constitue une partie de la connexion électrique du montage en série (SS) et est formée de telle manière que celle-ci fond dans le cas de la surintensité dans le montage en série (SS) et interrompt par conséquent la connexion électrique par le biais du montage en série (SS).

6. Réseau embarqué (BZ) selon l'une quelconque des revendications précédentes, dans lequel la première (T1) et/ou la seconde unité de commutation (T2) présente(-ent) respectivement un sectionneur ou un sectionneur à semi-conducteur ou un sectionneur MOSFET.

7. Réseau embarqué (BZ) selon l'une quelconque des revendications précédentes, dans lequel
- l'ensemble d'interrupteur de séparation (TS) présente en outre une première unité de protection contre les surtensions (D1), qui se trouve entre un premier point de connexion électrique (P1), qui se trouve sur un trajet de courant (SP) et entre une première des deux branches de réseau embarqué (BZ2) et l'ensemble d'interrupteur de séparation (TS), et qui est raccordée électriquement à une masse électrique (GND) et est configurée pour protéger l'ensemble d'interrupteur de séparation (TS) contre les surtensions dans la première branche de réseau embarqué (BZ2) ; et/ou
- l'ensemble d'interrupteur de séparation (TS) présente en outre une seconde unité de protection contre les surtensions (D2), qui se trouve entre un second point de connexion électrique (P2), qui se trouve sur un trajet de courant (SP) et entre une seconde des deux branches de réseau embarqué (BZ3) et l'ensemble d'interrupteur de séparation (TS), et est raccordée électriquement à la masse électrique (GND) et est configurée pour protéger l'ensemble d'interrupteur de séparation (TS) contre les surtensions dans la seconde branche de réseau embarqué (BZ3).

8. Réseau embarqué (BZ) selon la revendication 7, dans lequel
- la première unité de protection contre les surtensions (D1) présente une première diode de suppression unidirectionnelle, qui est raccordée électriquement entre le premier point de connexion électrique (P1) et la masse (GND), dans lequel le sens de blocage de la première diode de suppression est dirigée du premier point de connexion électrique (P1) vers la masse (GND) ; et/ou
- la seconde unité de protection contre les surtensions (D2) présente une seconde diode de suppression unidirectionnelle, qui est raccordée électriquement entre le second point de connexion électrique (P2) et la masse (GND), dans lequel le sens de blocage de la seconde diode de suppression est dirigée du second point de connexion électrique (P1) vers la masse (GND).

9. Réseau embarqué (BZ) selon la revendication 8, dans lequel la première et/ou la seconde diode de suppression présente(-ent) respectivement une tension de claquage, qui se trouve(-ent) sous une tension critique, laquelle peut conduire à un dysfonctionnement pour l'ensemble d'interrupteur de séparation (TS).

10. Réseau embarqué (BZ) selon la revendication 7, dans lequel la première (D1) et/ou la seconde (D2) unité de protection contre les surtensions présente(-ent) respectivement un circuit de verrouillage.

11. Véhicule automobile ou véhicule automobile entraîné électriquement, qui présente un réseau embarqué (BZ) selon l'une quelconque des revendications précédentes.
